# FASCICULE DE BREVET EUROPEEN

(11) **EP 2 649 522 B1**
(45) Date de publication et mention de la délivrance du brevet: **01.04.2020**
(21) Numéro de dépôt: 11794119.5
(22) Date de dépôt: 06.12.2011
(51) Int. Cl.: G06F 8/41, G06F 9/54

(54) **METHODE DE MISE A DISPOSITION D'UNE APPLICATION EN TANT QUE LIBRAIRIE DANS UNE MACHINE VIRTUELLE**
VERFAHREN ZUR BEREITSTELLUNG EINER ANWENDUNG ALS BIBLIOTHEK IN EINER VIRTUELLEN MASCHINE
METHOD FOR PROVIDING AN APPLICATION AS A LIBRARY IN A VIRTUAL MACHINE

(30) Priorité: 06.12.2010 FR 1060148
(43) Date de publication de la demande: 16.10.2013
(73) Titulaire: Google LLC, Mountain View, CA 94043 (US)
(72) Inventeur: CABILLIC, Gilbert, F-35530 Brece (FR); LESOT, Jean-Philippe, F-35370 Argentre Du Plessis (FR)
(74) Mandataire: Anderson, Oliver Ben
(86) Numéro de dépôt international: PCT/EP2011/071981
(87) Numéro de publication internationale: WO 2012/076556

(56) Documents cités:
- US-A- 5 408 665
- US-A- 6 066 181
- US-A1- 2003 051 233
- US-A1- 2006 184 919
- US-A1- 2007 136 719
- US-A1- 2008 216 063

## Description

### 1 DOMAINE DE L'INVENTION

L'invention se rapporte à la compilation et à la gestion de la compilation d'application destinées à être mise en œuvre sur un terminal de communication. Un terminal de communication peut être un ordinateur, un téléphone, un assistant personnel programmable, etc.

### 2 SOLUTIONS DE L'ART ANTÉRIEUR

En règle générale, les applications sont soit compilées nativement dans les langages binaires supportés par le terminal, soit compilées sous la forme d'un code intermédiaire pour être ensuite exécuté par une machine virtuelle. Cette dernière possibilité est parfois reconnue par certains comme n'étant pas complètement optimale et ce malgré l'utilisation de technique de compilation avant l'exécution du programme (AOT, « Ahead of time »), ou durant son exécution (JIT, « Just in time » ou DAC, « Dynamic Adaptive Compiler »). En effet, ces techniques posent des problèmes dans des environnements ou la pmssance de calcul et les ressources disponibles sont faibles. De plus, ces dernières techniques à base de compilateurs sont intégrées dans la machine virtuelle elle même.

En dehors de ces techniques, il existe peu de latitude pour permettre une mise en œuvre optimisée d'une application par l'intermédiaire d'une machine virtuelle.

Le document US 2003/051233A1 décrit un premier programme capable d'être référencé par un second programme. Pour compiler le deuxième programme, des informations, y compris une définition d'interface, sont générées par un convertisseur pour le premier programme. De plus, un générateur est prévu pour générer un premier code source à partir de la définition d'interface, de sorte qu'un deuxième code source puisse être développé et que le deuxième programme puisse être compilé à partir des premier et deuxième codes source.

Le document US 6 066 181A décrit un générateur de code d'interface native Java pour faciliter la programmation en langage mixte en rendant le code natif programmé dans un langage natif accessible aux programmes d'application Java. Un programmeur génère une définition d'interface native pour le code natif, utilisant de préférence un langage de définition d'interface (IDL) neutre pour décrire les composants de code natif (fonctions, structures de données, constantes et autres types de données définis par l'utilisateur), pour lesquels des mappages natifs doivent être générés. Le générateur de code d'interface native Java prend en charge des types de données complexes, notamment des structures de données imbriquées et des tableaux multidimensionnels. Le générateur de code d'interface native Java lit et analyse la définition d'interface native dérivée de l'utilisateur et génère des classes Java, des stubs de code de conversion de données et des fichiers d'en-tête associés. Les classes Java se composent de classes de méthodes natives, ainsi que de classes de types de données complexes, appelées à partir de Java. Chaque méthode native est mappée sur une fonction ou une procédure écrite en code natif, à l'aide de l'interface JNI (Java Native Interface). Les stubs de code de conversion de données (code JNI) convertissent et mappent les données et fonctions natives entre le langage natif et Java.

Le document US 2008/216063A1 décrit un procédé implémenté par ordinateur analysant un premier code dans un premier langage informatique géré et générant un code intermédiaire dans un langage complété. Le code intermédiaire est un code de liaison qui permet au deuxième code dans un deuxième langage d'exécution géré d'interagir avec le premier code.

Le document US 2006/184919A1 décrit des procédés et un appareil permettant de prendre en charge l'exécution d'une application gérée liée à une bibliothèque ou une application native. Les procédés et l'appareil décrits prennent en charge une machine virtuelle associée au même ISA que la plate-forme d'exécution, tandis que l'ISA de la bibliothèque ou de l'application native est d'un ISA différent. Les procédés et l'appareil décrits prennent également en charge l'exécution d'une application gérée qui est liée à plusieurs bibliothèques ou applications natives associées à plusieurs ISA différents, respectivement.

Le document US 5 408 665A décrit un système de développement comprenant un compilateur, un éditeur de liens et une interface. Le compilateur sert à compiler les listages sources en modules objets (initialement stockés dans des fichiers .OBJ). Un bibliothécaire est fourni pour combiner les fichiers souhaités des fichiers .OBJ en un ou plusieurs fichiers de bibliothèque. Le bibliothécaire fournit pour chaque fichier de bibliothèque un dictionnaire étendu, qui comprend une liste de dépendances et une liste externe non résolue pour chaque module de la bibliothèque. Des méthodes sont décrites pour lier des modules d'objet à partir de fichiers .OBJ et de fichiers de bibliothèque, les modules d'objet de bibliothèque non nécessaires au lien pouvant être déterminés avant que les bibliothèques ne soient analysées lors du premier passage de l'éditeur de liens. De cette manière, les modules d'objets de bibliothèque qui ne sont pas nécessaires lors des opérations de liaison ultérieures peuvent être ignorés.

### 3 RÉSUMÉ DE L'INVENTION

L'invention est spécifiée dans les revendications. L'invention ne présente pas ces inconvénients de l'art antérieur. L'invention se rapporte à une méthode de mise à disposition d'une application par l'intermédiaire d'une machine virtuelle. Selon l'invention, une telle méthode comprend une étape de compilation d'une application écrite dans un code source ou un code intermédiaire en une application native pour une plateforme considérée et une étape de transformation de ladite application native compilée en une librairie, ladite librairie étant mise à disposition de ladite machine virtuelle.

Ainsi, l'application peut être utilisée de manière transparente par la machine virtuelle à l'aide d'interfaces adaptées tout en conservant les optimisations réalisées lors de la compilation en code natif. Il n'est ainsi pas obligatoire de modifier l'implémentation de la machine virtuelle ou de l'application. En effet, l'invention permet de ne pas casser ni la machine virtuelle ni l'application. La technique de l'invention est transparente.

Selon une implémentation préférée, les différentes étapes du procédé selon l'invention sont mises en œuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la méthode de l'invention ;
- la figure 2 illustre les différentes étapes qui ont lieu durant la compilation, selon un mode de réalisation de l'invention ;
- la figure 3 décrit un dispositif de mise à disposition selon l'invention.

### 5 DESCRIPTION DÉTAILLÉE DE L'INVENTION

### 5.1 Rappel du principe de l'invention

Le principe général de l'invention, comme cela a déjà été explicité, consiste à accélérer une application, qui est au départ une application qui s'exécute par l'intermédiaire d'une machine virtuelle (donc une application qui peut souffrir en règle générale de problèmes de performances) en transformant cette application en une librairie native - c'est-à-dire une librairie écrite en langage machine ou en langage binaire qui est donc directement compréhensible par la machine. À la différence d'autres techniques connues, il ne s'agit pas de réaliser une compilation en temps réel au moment de l'utilisation de l'application, mais bien d'offrir une librairie complémentaire à l'application qui est installée en même temps que l'application. Cette technique peut être mise en œuvre dans tous les systèmes d'exploitation qui exploitent une machine virtuelle. Cette technique peut plus particulièrement être mise en œuvre avec les applications Java™ sur le système d'exploitation Windows™ ou sur le système d'exploitation Linux™.

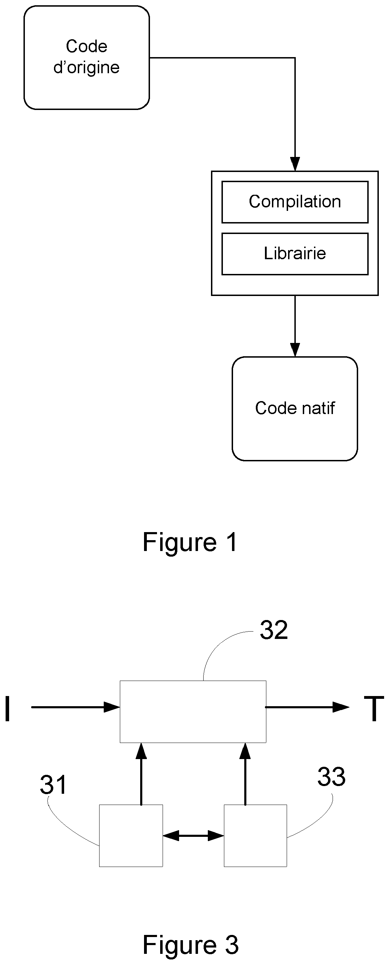

Le principe de l'invention est décrit en relation avec la figure 1.

Pour ce faire, l'invention comprend une étape de compilation de l'application (qu'elle soit en code source ou en code intermédiaire) en une application native (c'est-à-dire une application qui comprend des instructions de code propres au système sur lequel elle s'exécute). Selon une caractéristique particulière, il n'est pas nécessaire que l'ensemble de l'application soit compilée en langage natif, mais il se peut que seuls quelques modules le soient (il s'agit par exemple des modules qui présentent le plus de problèmes de performances).

L'invention comprend également une étape de transformation de ladite application native compilée en une librairie, ladite librairie étant mise à disposition de ladite machine virtuelle. Au cours des étapes précédemment mentionnées, et plus particulièrement de l'étape de compilation, on gère des structures de données particulières qui permettent de réaliser l'interface entre les fonctionnalités de l'Application et les fonctionnalités de la machine virtuelle et assurer un fonctionnement transparent de l'ensemble.

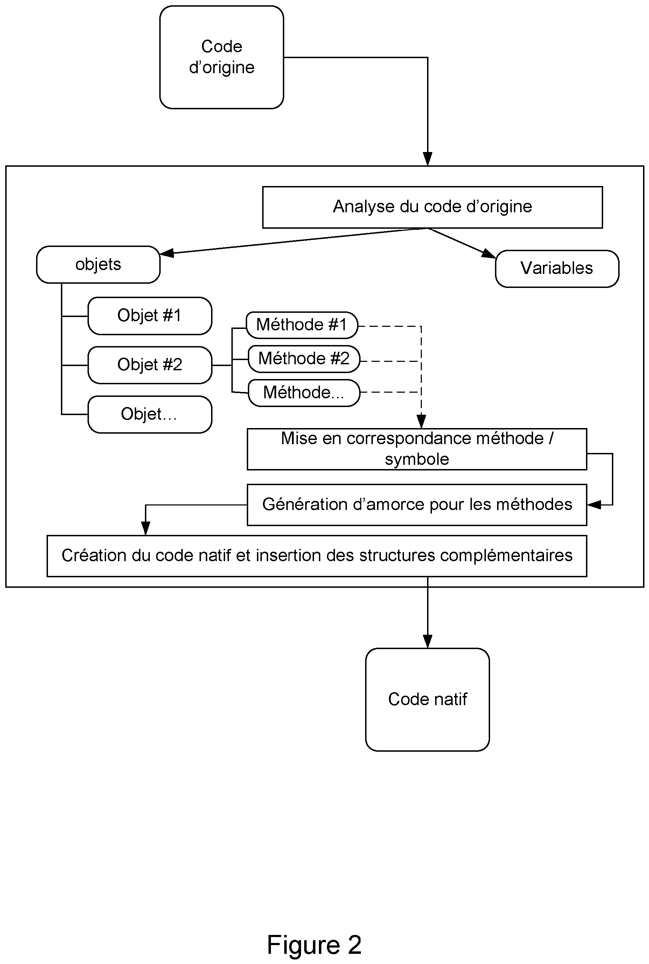

On présente, en relation avec la figure 2, les différentes étapes qui ont lieu durant l'étape de compilation, selon un mode de réalisation de l'invention.

L'étape de compilation, qui délivre le code natif de l'Application, comprend en autres étapes :
- une étape d'analyse dudit code d'origine de ladite application, délivrant au moins un ensemble d'objets de ladite application et au moins un ensemble de variables de ladite application, un objet dudit ensemble d'objets comprenant au moins une méthode associée ;
- une étape de mise en correspondance d'au moins une méthode d'un objet dudit ensemble d'objets avec un symbole correspondant dans un code natif de ladite application native, en fonction dudit ensemble d'objets ;
- une étape de génération d'une amorce d'exécution de fonction pour chaque méthode à compiler, en fonction dudit ensemble d'objets ;
- une étape de création de ladite application native en fonction de ladite mise en correspondance et de ladite génération de ladite amorce.

Cette dernière étape de création du code natif est réalisée en insérant dans le code natif en plus du résultat de la compilation code d'origine code natif, les structures de données et le code natif nécessaires à la mise en correspondance des méthodes et des symboles, les amorces d'exécution (stub).

D'autres structures de données et d'autre code natif, par exemple liées aux variables, aux exceptions, au ramasse miette (garbage collector), etc. sont également insérées en fonction de la nature du code et de la nature de l'interaction avec la machine virtuelle.

On présente, en relation avec la figure 3, un mode de réalisation d'un dispositif de mise à disposition selon l'invention.

La figure 3 représente de manière simplifiée un exemple de structure d'un dispositif de mise à disposition selon un mode de réalisation de l'invention.

Par exemple, le dispositif de mise à disposition comprend une mémoire 31 constituée d'une mémoire tampon, une unité de traitement 32, équipée par exemple d'un microprocesseur et de mémoire vive, et pilotée par le programme d'ordinateur 33, mettant en œuvre un procédé de mise à disposition selon l'invention.

À l'initialisation, les instructions de code du programme d'ordinateur 33 sont par exemple chargées dans une mémoire avant d'être exécutées par le processeur de l'unité de traitement 32.

Le microprocesseur, la mémoire vive, le programme d'ordinateur coopèrent ensemble et forment les moyens de mise en œuvre du procédé de l'invention dans ce mode de réalisation. Dans d'autres modes de réalisation des modules matériels de traitement spécifique peuvent être implémentés pour mettre en œuvre l'invention.

On présente, dans un mode de réalisation particulier, la mise en œuvre de l'invention appliquée à l'environnement Android™ ainsi qu'à la machine virtuelle Dalvik™. Les paragraphes qui suivent décrivent une telle mise en œuvre. Il est bien entendu que l'ensemble des techniques décrites ci-après peuvent être mises en œuvre dans d'autres types d'environnement à base de machine virtuelle et de code intermédiaire.

### 5.2 Description d'un mode de réalisation particulier.

Comme cela a déjà été explicité, l'invention présente une technologie permettant d'accélérer une application, une librairie, un service ou tout autre programme s'exécutant sur une plate-forme comme par exemple Android™ (par la suite on utilise le terme générique d' « Application »).

La technologie résultant de l'invention peut être matérialisée sous la forme d'un programme d'ordinateur exécutable par une plateforme Android™ en liaison avec une machine virtuelle. Ce programme d'ordinateur exécutable est par la suite nommé « Librairie ». Cette librairie se compose d'une partie « Runtime » se chargeant de l'interfaçage avec la machine virtuelle, et d'une partie « Programme » qui correspond à la compilation du code de l'Application et met en œuvre les fonctionnalités de l'application.

Pour ce faire, le procédé de l'invention compile l'Application en code natif, puis en fait une Librairie proposant les mêmes fonctionnalités. Selon l'invention, cette librairie peut être chargée de deux techniques différentes. La première technique consiste à faire charger la librairie par l'Application elle-même, c'est-à-dire par une partie non compilée de l'Application qui est interprétée par la machine virtuelle et qui provoque le chargement de la Librairie ou moyen d'un appel de libraire système adéquate (par exemple pour la machine virtuelle Dalvik, la méthode « java.lang.System.loadLibrary »). La deuxième technique consiste à utiliser le système inclus dans le terminal et chargé au démarrage de celui-ci. Dans ce dernier cas, toutes les applications du terminal bénéficient de l'accélération de cette librairie.

Selon l'invention, la libraire est accompagnée d'un fichier de liaison qui permet de mettre en correspondance les méthodes Java d'origine, chacune étant représentée par leur nom complet (nom du paquet, suivit des noms des classes contenantes puis le nom de la méthode avec le type des ces paramètres encodés) et le code compilé (c'est-à-dire le code contenu dans la Librairie représentée par un nom symbole) réalisant la même fonctionnalité. Ce fichier est utilisé lors de l'initialisation de la Libraire.

Dans une autre alternative, une convention de nommage permet de mettre en correspondance les méthodes Java d'origine et le code compilé (c'est-à-dire le code contenu dans la Librairie représenté par un symbole) réalisant la même fonctionnalité de manière algorithmique. Il peut s'agir d'un identifiant interne de la machine virtuelle. Par exemple, l'index de la méthode dans le fichier DEX (de l'anglais pour « *Dalvik* Exécutable », fichier exécutable de la machine virtuelle Dalvik ») compatible avec une machine virtuelle Dalvik peut servir d'identifiant de méthode pour retrouver un nom de symbole dans la Libraire. A un index 1, on fait correspondre le symbole A, à un index 2 le symbole B, et ainsi de suite. N'importe quel codage bijectif de cette information interne en nom de symbole est possible.

La Libraire obtenue par l'objet de l'invention est compatible avec toutes les caractéristiques de la machine virtuelle Dalvik (chargement dynamique des classes, code JNI, ramasse miette (« garbage collector »), exception, etc. De plus la Libraire obtenue par l'objet de l'invention est non intrusive dans la machine virtuelle Dalvik puisqu'elle réutilise les méthodes internes de la machine virtuelle Dalvik, ainsi que ses algorithmes.

### 5.3 Convention d'appel (« Calling convention »)

L'application compilée par la méthode objet de l'invention utilise la convention d'appel JNI. Celle-ci est un sur-ensemble de la convention d'appel C et est donc performante. La convention d'appel JNI est un sur-ensemble de la convention d'appel C principalement car elle impose seulement un nommage particulier supplémentaire pour le nom des fonctions et le passage d'un paramètre supplémentaire représentant l'environnement JNI. Par conséquent la Libraire compilée peut invoquer efficacement du code natif JNI puisqu'elle utilise la même convention d'appel.

Dans une autre alternative, la Libraire compilée par la méthode objet de l'invention pourrait également utiliser la convention d'appel de la machine virtuelle Dalvik. Celle-ci n'est pas compatible avec la convention d'appel C, par conséquent si l'on souhaite l'utiliser de manière optimale, la convention d'appel de la machine virtuelle Dalvik doit être intégrée dans le compilateur qui est utilisé pour construire la Librairie compilée. Le compilateur « LLVM » permet, par exemple, de définir facilement sa propre convention d'appel et ainsi générer un code compatible avec la machine virtuelle et qui est plus performant.

### 5.4 Initialisation

Lors de l'initialisation de la Librairie compilée, les traitements décrits dans la section « Linkage » (5.9) sont exécutés. Ensuite, le code compilé est installé dans la machine virtuelle Dalvik. L'installation du code compilé se fait grâce à un fichier de liaison généré par la méthode objet de l'invention lors de la compilation de l'application. Ce fichier permet de mettre en correspondance les méthodes Java et le code compilé.

Une alternative à cette technique consiste à utiliser une mise en correspondance algorithmique entre le nom de la méthode Java et le symbole correspondant au code compilé.

Lors de l'installation du code compilé dans la machine virtuelle Dalvik, le descripteur de chaque méthode compilée est demandé à la machine virtuelle Dalvik, puis chaque descripteur est modifié. Les modifications permettent d'informer la machine virtuelle Dalvik :
- que chaque invocation provenant d'un code non compilé par la méthode objet de l'invention doit invoquer le « stub » (l'amorce en français, cf. section « Stub » 5.5.) correspondant à cette méthode. Concrètement, il s'agit d'indiquer par un drapeau que la méthode est native, et de renseigner le pointeur de fonction sur ce « stub ». Ainsi, quand la machine virtuelle voudra invoquer la méthode compilée, celle ci invoquera le stub qui se chargera de transformé la convention d'appel de la machine virtuelle vers la convention d'appel de la méthode compilée (par exemple JNI).
- de l'adresse de la fonction « C » qui réalisera la fonctionnalité de cette méthode par l'intermédiaire d'un pointeur de fonction. Ainsi, le « stub » sus-mentionné récupère cette adresse et peut lui-même invoquer cette fonction quand il a transformé la convention d'appel. Mais aussi le code compilé présent dans la Librarie peut utiliser ce pointeur pour invoquer une autre méthode compilée.

Dans le système Android, lorsque cette initialisation est effectuée dans l'application, seule cette application bénéficie de la version compilée de la librairie, et donc est accélérée.

Par contre, lorsque cette initialisation est effectuée dans le processus « Zygote », toutes les applications et services instanciés par le système bénéficient de la version compilée de la librairie, et donc l'ensemble du système est accéléré. En effet, le processus « Zygote » utilise la technique de « fork » pour lancer une nouvelle application. Cette technique permet à un processus fils d'hériter des valeurs en mémoire du processus père. Or, l'initialisation (qui vient d'être décrite) modifie les descripteurs de méthodes en mémoire avant cet appel système « fork ». Cette initialisation est donc propagée à tous les autres applications et services du système par héritage mémoire.

### 5.5 Stub (Amorce d'exécution de la fonction)

La méthode objet de l'invention si elle utilise la convention d'appel JNI, toutes les invocations de la machine virtuelle Dalvik vers le code compilé utilisent l'algorithme permettant d'invoquer une méthode JNI. Cet algorithme n'est parfois considéré comme n'étant pas toujours optimal car la machine virtuelle Dalvik doit analyser la signature de la méthode invoquée pour déterminer comment passer les paramètres à la méthode et ceux à chaque invocation.

Le runtime objet de l'invention génère un stub pour chaque méthode qu'il compile, car celui-ci connaît, hors-ligne, comment les paramètres doivent être passés. Ce stub est donc invoqué par la machine virtuelle Dalvik, ensuite le stub invoque la méthode compilée en réalisant un passage de paramètre optimal puisque l'analyse de la signature n'est plus nécessaire durant l'exécution.

### 5.6 Accés champs

Les champs d'instances (ou d'objets) et les champs statiques sont des notions essentielles et extrêmement utilisés dans le langage Java. Les accès à ces champs d'instances et ces champs statiques utilisent les mêmes algorithmes que la machine virtuelle Dalvik pour assurer la compatibilité des objets. La compatibilité est importante car les objets sont accédés aussi bien par les méthodes non compilées que par les méthodes compilées. Ces algorithmes (sous la forme de code natif spécifique) sont inclus dans le code généré par la méthode objet de l'invention afin d'obtenir une performance optimale.

Les champs d'instances sont accédés en ajoutant un décalage « offset » à l'adresse de l'instance alors que les champs statiques sont accédés directement par leur adresse. La section « linkage » (5.9) décrit les possibilités pour gérer ces offsets et ces adresses.

### 5.7 Invocation de méthodes

Pour les mêmes raisons que les accès aux champs, l'invocation de méthodes utilise les algorithmes de la machine virtuelle Dalvik pour assurer la compatibilité des objets. Ces algorithmes sont également inclus dans le code compilé par la méthode objet de l'invention afin d'obtenir une performance optimale.

L'inclusion des algorithmes dans le code généré à l'endroit de l'invocation permet d'utiliser des versions spécialisées pour cet emplacement précis et non pas des versions génériques pour toutes les invocations. Ainsi, le code compilé par la méthode objet de l'invention évite l'analyse de la signature de la méthode invoquée et recopie directement les paramètres car à cet emplacement les paramètres de la méthode appelée sont connus lors de la compilation. Au contraire, le code générique de la machine virtuelle Dalvik doit analyser la signature de la méthode invoquée afin de décider comment un paramètre doit être recopié suivant son type, car ce code générique est exécuté quel que soit la méthode appelée.

La méthode objet de l'invention permet d'optimiser certaines invocations lorsque la méthode invoquée peut-être déterminée hors-ligne et lorsque la méthode invoquée est également compilée. Ainsi, par analyse, la méthode de compilation, constate qu'une invocation est réalisée de manière constante à une localisation donnée du code.. Par exemple, c'est le cas pour une invocation qui n'est pas de type virtuelle (donc de type statique ou d'une méthode privée) ou bien ne pouvant pas être redéfinie (méthode ou classe finale du langage Java). Ces invocations peuvent alors être remplacées par une invocation directe, c'est-à-dire un simple appel de fonction « C » compilée dans la librairie.

Les algorithmes d'invocation de la machine virtuelle Dalvik peuvent utiliser des adresses ou bien des offsets pour représenter les méthodes invoquées. La section « Linkage » décrit les possibilités pour gérer ses offsets et adresses.

### 5.8 Autres mécanismes d'accès.

D'une manière plus générale, tous les autres mécanismes (accès aux tableaux, création d'objets, vérification de types, etc.) sont gérés de façon identique aux champs et aux invocations de méthodes, à savoir :
- Si l'opération est fréquente, l'algorithme de la machine virtuelle Dalvik est utilisé, mais son code est généré directement dans le code cible (mécanisme d'inline) et spécialisé en fonction du contexte d'appel connu hors-ligne (par exemple, une vérification de type peut être optimisée car le compilateur sait si le type est un tableau ou un objet, et donc la vérification est optimisée en fonction de ce contexte connu hors-ligne) ;
- Si l'opération n'est pas fréquente, le code de la machine virtuelle Dalvik est appelé directement, sans optimisations précises.

### 5.9 Linkage

Les algorithmes d'invocations de méthodes et d'accès champs utilisent des décalages « offsets » et/ou des adresses pour représenter les champs et méthodes utilisés. La méthode objet de l'invention offre trois possibilités de gérer ces adresses et ses offsets :
- Par construction, la valeur de l'offset utilisé pour représenter une méthode ou bien un champ est constante d'une exécution à l'autre. La méthode objet de l'invention peut donc récupérer leur valeur en effectuant une première exécution de l'application, puis les sauvegardes dans un fichier. Ce fichier est ensuite directement utilisé lors de la compilation de l'application optimisée afin d'offrir un maximum d'opportunité d'optimisations. Ces offsets peuvent également être obtenu en appliquant les mêmes algorithmes que la machine virtuelle Dalvik, mais hors-ligne et ainsi éviter la première exécution permettant de récupérer ces offsets.
- Lorsqu'une adresse représentant une méthode ou un champ n'est pas constante d'une exécution à l'autre, la méthode objet de l'invention ajoute donc une variable globale permettant de sauvegarder chaque adresse représentant une méthode ou un champ utilisé par l'application. Ces variables globales sont initialisées lors du démarrage de l'application optimisée en interrogeant la machine virtuelle Dalvik pour obtenir la valeur de ces adresses. Par la suite, le code compilé utilise ces variables sans réinterroger la machine virtuelle Dalvik. Il est également possible d'utiliser ces variables globales pour sauvegarder la valeur des offsets représentant une méthode ou bien un champ et ne pas utiliser le premier cas.
- La dernière possibilité permet à la méthode objet de l'invention de ne plus utiliser des variables globales pour sauvegarder l'information de la machine virtuelle Dalvik. Lors du chargement de l'application optimisée, un linkage dynamique est réalisé. C'est-à-dire que tous les endroits de l'application où sont utilisé un offset ou une adresse sont remplacés par leur valeur correspondante, qui comme dans le deuxième cas est connu lors du démarrage de l'application optimisé.

### 5.10 Garbage Collector

Selon la méthode connue, la compatibilité de code natif JNI avec le Garbage Collector de la machine virtuelle Dalvik est assurée en utilisant une table des références d'objets importées dans le monde natif. Ainsi, le Garbage Collector peut d'une façon sécurisé, être déclenché en parallèle, il lui suffit de scanner cette table durant sa phase de détermination des références racines. À chaque appel de la machine virtuelle Dalvik par du code natif JNI, cette table est mise à jour en fonction des références importées.

Pour des raisons de performances, la compatibilité du Garbage Collector de la machine virtuelle Dalvik n'est pas assurée de la même façon dans la méthode objet de l'invention. Dans son ensemble, cette compatibilité est plus proche de la façon dont la machine virtuelle Dalvik gère le Garbage Collector durant l'interprétation de code. Il s'agit du mécanisme suivant :
Au début de chaque méthode, le code compilé :
- Vérifie que le Garbage Collector n'a pas demandé de s'exécuter en lisant un flag de la machine virtuelle Dalvik.
- Dans l'affirmative, appelle une méthode de la machine virtuelle Dalvik pour s'auto suspendre et laisser s'exécuter le Garbage Collector,
- Indique, par l'intermédiaire d'un drapeau de statut de la machine virtuelle Dalvik, que la Thread n'est pas interruptible par le Garbage Collector.

Ainsi, le code compilé peut faire usage des références d'objets comme il le souhaite sans avoir à maintenir une table. En contrepartie, avant chaque appel de méthode, et avant chaque création d'objet, le code compilé ajoute les références d'objets vivants dans cette table, car aussi bien en début d'exécution de méthode (mécanisme décrit en début de section), que pendant l'invocation d'une méthode interprétée, que durant la création d'objet, le Garbage Collector peut se déclencher.

Pour générer le code compilé qui ajoute les références d'objets vivants, le compilateur calcule les variables vivantes contenant potentiellement des références. Il émet alors une série d'instructions qui ajoutent leur contenu (le contenu des variables vivantes) dans la table des références locales de la machine virtuelle Dalvik. A noter qu'il connaît ainsi le maximum des variables vivantes qu'il va ajouter durant la vie de la méthode, et ainsi, il peut générer une vérification de la place disponible dans la table en début d'exécution de la méthode.

De plus, dans certaines portions de programme contenant des boucles de calcul sans aucun appel de méthodes, le compilateur peut insérer un point de suspension possible pour le Garbage Collector. Ce point de suspension est un point dans le programme où le Garbage Collector à le droit de s'exécuter. Pour cela, il génère du code séquentiellement :
- Qui ajoute les références vivantes dans la table des références globales,
- Qui vérifie que le Garbage Collector n'a pas demandé de s'exécuter en lisant un drapeau de la machine virtuelle Dalvik,
- Qui appel, dans l'affirmative, une méthode de la machine virtuelle Dalvik pour s'auto suspendre et laisser tourner le Garbage Collector,
- Qui indique, par l'intermédiaire d'un flag de status de la machine virtuelle Dalvik, que la Thread n'est pas interruptible par le Garbage Collector,
- Qui retire les références précédemment ajoutées.

### 5.11 Gestion des exceptions d'exécution

Les exceptions C++ du runtime Android ne sont pas disponibles dans toutes les versions. De plus, les exceptions C++ ne sont pas aussi performantes que l'on souhaite. Il faut donc que le compilateur gère un système d'exception en C. Classiquement, dans les implémentations connues, un système de capture / restauration du contexte d'exécution à l'aide des fonctions de la librairie standard setjump/longjump est mis en place. Un tel système à un coût prohibitif de sauvegarde et restauration d'état complet du processeur, car ce mécanisme est générique et doit pouvoir convenir à tout programme C.

La méthode objet de l'invention utilise un mécanisme moins coûteux et compatible avec la machine virtuelle Dalvik. En effet, celle-ci possède un champ dans son espace TLS (Thread Local Storage) contenant l'objet Java qui est lancé au travers d'une exception. La méthode objet de l'invention comprend l'insertion de code qui permet, quand une exception est levée dans le code compilé, d'affecter ce champ avec la référence de l'objet à lancer puis de brancher sur le code traitant cette exception (soit le bloc try/catch par défaut, soit le bloc try/catch défini dans la méthode compilée et gérant cette exception). Si la méthode retourne dans l'interpréteur de la machine virtuelle Dalvik, celle-ci va vérifier s'il y a une exception pendante, et réaliser le traitement adéquat.

Ainsi, la méthode objet de l'invention insère lors de la compilation, dans chaque méthode, un try/catch par défaut englobant tout le code de la méthode, et dont le traitement est un simple retour de méthode. Si la méthode doit retourner une valeur, celle-ci retourne une valeur arbitraire. Alternativement, cette mécanique de try/catch par défaut peut être remplacée directement par un return à tous les endroits du code branchant sur ce try/catch par défaut.

La méthode objet de l'invention insère également à la fin de la méthode compilée, pour chaque bloque try / catch rencontré dans cette méthode, un label suivit d'un code qui décode en fonction du type de l'objet exception (correspondant au type de caque bloque catch du même try), et qui effectue le traitement adéquate associé à ce catch. Il rajoute un code qui branche au try/catch supérieur (c.à.d. le plus prés) si le décodage en fonction du type de l'objet n'a pas trouvé de type correspondant.

La méthode objet de l'invention génére du code qui vérifie après chaque instruction pouvant potentiellement déclencher ou bien propager une exception (throw, invocation, accès tableau, ...) s'il y a une exception pendante. Dans l'affirmative, le mèthode objet de l'invention insère un branchement vers le label correspondant au bloque try/catch le plus proche de l'invocation ou bien le bloque try/catch par défaut si aucun n'est défini dans la méthode compilée.

## Revendications

1. Méthode de mise à disposition d'une application par l'intermédiaire d'une machine virtuelle, **caractérisée en ce qu'**elle comprend
une étape de compilation d'une application écrite dans un code d'origine en une application native pour une plateforme considérée, l'étape comprenant:
mettre en correspondance au moins une méthode d'un objet de ladite application avec un symbole correspondant dans un code natif de ladite application native ;
générer une amorce d'exécution de fonction pour chaque méthode à compiler de ladite application, où ladite amorce transforme une convention d'appel de la machine virtuelle vers une convention d'appel de la méthode compilée ; et
créer ladite application native en insérant dans un code natif de ladite application native lesdites amorces d'exécution; et
une étape de transformation de ladite application compilée en une librairie, ladite librairie étant mise à disposition de ladite machine virtuelle par l'installation d'un code compilé dans la machine virtuelle, comprenant :
pour chaque méthode compilée :
demander un descripteur de la méthode à la machine virtuelle; et
modifier le descripteur de la méthode de telle sorte que chaque invocation provenant d'un code non compilé appelle l'amorce d'exécution correspondant à la méthode, et en indiquant l'adresse de la fonction native qui réalisera la fonctionnalité de la méthode de telle sorte que l'amorce d'exécution invoque ladite fonction après avoir transformé la convention d'appel; et
une étape d'exécution de l'application par la machine virtuelle.

2. Méthode selon la revendication 1, **caractérisée en ce que** ladite étape de compilation est mise en œuvre par un dispositif de mise à disposition d'application, ladite étape de compilation comprenant en outre:
une étape d'analyse dudit code d'origine de ladite application, délivrant au moins un ensemble d'objets de ladite application et au moins un ensemble de variables de ladite application, un objet dudit ensemble d'objets comprenant au moins une méthode associée.

3. Méthode selon la revendication 2, **caractérisée en ce que** ladite étape de compilation comprend en outre :
une étape d'insertion d'un premier ensemble de codes natifs spécifiques d'accès à au moins une variable dudit ensemble de variables et/ou à au moins un objet dudit ensemble d'objets de ladite application compilée par ladite machine virtuelle ;
une étape d'insertion d'un deuxième ensemble de codes natifs spécifiques d'invocation d'au moins une méthode d'un objet dudit ensemble d'objets de ladite application compilée par ladite machine virtuelle.

4. Méthode selon la revendication 3, **caractérisée en ce que** les codes natifs dudit premier ensemble de codes natifs spécifiques gèrent l'accès à au moins un champ par l'intermédiaire d'un décalage d'adresse en mémoire et/ou par l'intermédiaire d'une adresse d'accès spécifique.

5. Méthode selon la revendication 3, **caractérisée en ce que** les codes natifs dudit deuxième ensemble de codes natifs spécifiques gèrent l'accès à ladite au moins une méthode de ladite application native par l'intermédiaire d'un décalage d'adresse en mémoire et/ou par l'intermédiaire d'une adresse d'accès spécifique.

6. Méthode selon la revendication 2, **caractérisée en ce que** ladite étape de compilation comprend en outre:
une étape de génération d'un mécanisme de gestion d'exceptions d'exécution spécifique au sein de ladite au moins une méthode d'objets appartenant audit ensemble d'objets;
une étape d'insertion d'un mécanisme spécifique de gestion des objets non utilisés par ladite machine virtuelle.

7. Dispositif de mise à disposition d'une application par l'intermédiaire d'une machine virtuelle **caractérisé en ce qu'**il comprend
des moyens de compilation d'une application écrite dans un code source en une application native pour une plateforme considérée, les moyens comprenant:
des moyens de mise en correspondance d'au moins une méthode d'un objet de ladite application avec un symbole correspondant dans un code natif de ladite application native ;
des moyens de génération d'une amorce d'exécution de fonction pour chaque méthode à compiler de ladite application dans lesquels ladite amorce transforme une convention d'appel de la machine virtuelle vers une convention d'appel de la méthode compilée ; et
des moyens de création de ladite application native en insérant dans un code natif de ladite application native lesdites amorces d'exécution; et
des moyens de transformation de ladite application compilée en une librairie, ladite librairie étant mise à disposition de ladite machine virtuelle par l'installation d'un code compilé dans la machine virtuelle, aptes, pour chaque méthode compilée, à
demander un descripteur de la méthode à la machine virtuelle; et
modifier le descripteur de la méthode de telle sorte que chaque invocation provenant d'un code non compilé appelle l'amorce d'exécution correspondant à la méthode, et en indiquant l'adresse de la fonction native qui réalisera la fonctionnalité de la méthode de telle sorte que l'amorce d'exécution invoque ladite fonction après avoir transformé la convention d'appel; et
des moyens d'exécution de l'application par la machine virtuelle.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de mise à disposition selon l'une au moins des revendications 1 à 6, lorsqu'il est exécuté sur un ordinateur.

## Patentansprüche

1. Verfahren zum Bereitstellen einer Anwendung mithilfe einer virtuellen Maschine, **dadurch gekennzeichnet, dass** diese Maschine folgende Schritte aufweist
einen Schritt zum Kompilieren einer Anwendung, die als native Anwendung für eine bestimmte Plattform in einen Originalcode geschrieben wird, wobei dieser Schritt Folgendes umfasst:
Zuordnen mindestens eines Verfahrens für ein Objekt dieser Anwendung zu einem entsprechenden Symbol in einem nativen Code der genannten nativen Anwendung;
Generieren eines Ausführungsstarts einer Funktion für jedes zu kompilierende Verfahren der genannten Anwendung, wobei dieser Start eine Aufrufkonvention der virtuellen Maschine in eine Aufrufkonvention des kompilierten Verfahrens umwandelt; und
Erstellen der genannten nativen Anwendung durch Integration, in einen nativen Code der genannten nativen Anwendung, der genannten Ausführungsstarts; und
einen Schritt zum Umwandeln der genannten kompilierten Anwendung in eine Bibliothek, wobei diese Bibliothek für die genannte virtuelle Maschine durch Installation eines kompilierten Codes in der virtuellen Maschine bereitgestellt wird, mit:
für jedes kompilierte Verfahren:
Beantragen eines Deskriptors des Verfahrens für die virtuelle Maschine; und
Ändern des Deskriptors des Verfahrens, sodass jedes Aufrufen aus einem nicht kompilierten Code den Ausführungsstart gemäß dem Verfahren auslöst, und durch Angabe der Adresse der nativen Funktion, die die Funktion des Verfahrens so ausführt, dass der Ausführungsstart diese Funktion nach Umwandlung der Aufrufkonvention aufruft; und
einen Schritt zum Ausführen der Anwendung durch die virtuelle Maschine.

2. Verfahren nach Anspruch 1, **dadurch gekennzeichnet, dass** dieser Schritt zum Kompilieren durch eine Vorrichtung zum Bereitstellen der Anwendung umgesetzt wird, wobei der Schritt zum Kompilieren Folgendes aufweist:
einen Schritt zum Analysieren des genannten Originalcodes der genannten Anwendung, wobei mindestens eine Gruppe von Objekten der genannten Anwendung und zumindest eine Gruppe von Variablen der genannten Anwendung ausgegeben wird, wobei ein Objekt dieser Gruppe von Objekten mindestens ein zugehöriges Verfahren aufweist.

3. Verfahren nach Anspruch 2, **dadurch gekennzeichnet, dass** dieser Schritt zum Kompilieren zudem Folgendes umfasst:
einen Schritt zum Integrieren einer ersten Gruppe von spezifischen nativen Codes für den Zugriff auf mindestens eine Variable dieser Gruppe von Variablen und/oder auf mindestens ein Objekt dieser Gruppe von Objekten der genannten Anwendung, die durch die genannte virtuelle Maschine kompiliert wird;
einen Schritt zum Integrieren einer zweiten Gruppe von spezifischen nativen Codes zum Aufrufen von mindestens einem Verfahren für ein Objekt dieser Gruppe von Objekten der genannten Anwendung, die durch die genannte virtuelle Maschine kompiliert wird.

4. Verfahren nach Anspruch 3, **dadurch gekennzeichnet, dass** die nativen Codes dieser ersten Gruppe von spezifischen nativen Codes den Zugriff auf mindestens ein Feld mithilfe einer Verschiebung der Adresse in den Speicher und/oder mithilfe einer spezifischen Zugangsadresse verwalten.

5. Verfahren nach Anspruch 3, **dadurch gekennzeichnet, dass** diese nativen Codes dieser zweiten Gruppe von spezifischen nativen Codes den Zugriff auf mindestens ein Verfahren dieser genannten nativen Anwendung mithilfe einer Verschiebung der Adresse in den Speicher und/oder mithilfe einer spezifischen Zugangsadresse verwalten.

6. Verfahren nach Anspruch 2, **dadurch gekennzeichnet, dass** dieser Schritt zum Kompilieren zudem Folgendes umfasst:
einen Schritt zum Generieren eines Mechanismus zur Verwaltung von Ausnahmen für die spezifische Ausführung innerhalb dieses mindestens eines Verfahrens für Objekte, die zur genannten Gruppe von Objekten gehören;
einen Schritt zum Integrieren eines spezifischen Mechanismus zur Verwaltung von Objekten, die von der genannten virtuellen Maschine nicht genutzt werden.

7. Gerät zum Bereitstellen einer Anwendung mithilfe einer virtuellen Maschine, **dadurch gekennzeichnet, dass** dieses Gerät folgende Mittel aufweist
Mittel zum Kompilieren einer Anwendung, die als native Anwendung für eine bestimmte Plattform in einen Quellcode geschrieben wird, wobei diese Mittel Folgendes umfassen:
Mittel zum Zuordnen mindestens eines Verfahrens für ein Objekt dieser Anwendung zu einem entsprechenden Symbol in einem nativen Code der genannten nativen Anwendung;
Mittel zum Generieren eines Ausführungsstarts einer Funktion für jedes zu kompilierende Verfahren der genannten Anwendung, wobei dieser Start eine Aufrufkonvention der virtuellen Maschine in eine Aufrufkonvention des kompilierten Verfahrens umwandelt; und
Mittel zum Erstellen der genannten nativen Anwendung durch Integration, in einen nativen Code der genannten nativen Anwendung, der genannten Ausführungsstarts, und
Mittel zum Umwandeln der genannten kompilierten Anwendung in eine Bibliothek, wobei diese Bibliothek für die genannte virtuelle Maschine durch Installation eines kompilierten Codes in der virtuellen Maschine bereitgestellt wird, wobei diese Mittel für jedes kompilierte Verfahren zu folgenden Aktionen in der Lage sind
Beantragen eines Deskriptors des Verfahrens für die virtuelle Maschine; und
Ändern des Deskriptors des Verfahrens, sodass jedes Aufrufen aus einem nicht kompilierten Code den Ausführungsstart gemäß dem Verfahren auslöst, und durch Angabe der Adresse der nativen Funktion, die die Funktion des Verfahrens so ausführt, dass der Ausführungsstart diese Funktion nach Umwandlung der Aufrufkonvention aufruft; und
Mittel zum Ausführen der Anwendung durch die virtuelle Maschine.

8. Computer-Programmprodukt, das von einem Kommunikationsnetzwerk heruntergeladen und/oder auf einem von einem Computer lesbaren Datenträger gespeichert und/oder durch einen Mikroprozessor ausgeführt werden kann, **dadurch gekennzeichnet, dass** dieses Produkt Programmcodeanweisungen für die Ausführung des Verfahrens zum Bereitstellen nach mindestens einem der vorhergehenden Ansprüche 1 bis 6 aufweist, wenn es auf einem Computer ausgeführt wird.

## Claims

1. A method for providing an application by means of a virtual machine, **characterized in that** it comprises
a step of compiling an application written in an original code into a native application for a target platform, the step comprising:
determining at least one method of an object of the application to correspond to a corresponding symbol in a native code of the native application;
generating a function stub for each method to be compiled of the application, wherein the stub transforms a calling convention of the virtual machine into a calling convention of the compiled method; and
creating the native application by inserting the stubs in a native code of the native application; and
a step of transforming the compiled application into a library, the library being made available to the virtual machine by installing a compiled code in the virtual machine, comprising:
for each compiled method:
requesting a descriptor of the method from the virtual machine; and
modifying the descriptor of the method such that each invocation from an uncompiled code calls the stub corresponding to the method, and indicating the address of the native function which will perform the functionality of the method such that the stub invokes the function after transforming the calling convention; and
a step of executing the application by the virtual machine.

2. A method according to claim 1, **characterized in that** the compiling step is implemented by an application provisioning device, the compiling step further comprising:
a step of analyzing the source code of the application, delivering at least one set of objects of the application and at least one set of variables of the application, an object of the set of objects comprising at least one associated method.

3. A method according to claim 2, **characterized in that** the compiling step further comprises:
a step of inserting a first set of specific native codes for access to at least one variable of the set of variables and / or to at least one object of the set of objects of the application compiled by the virtual machine;
a step of inserting a second set of specific native codes for invoking at least one method of an object of the set of objects of the application compiled by the virtual machine.

4. A method according to claim 3, **characterized in that** the native codes of the first set of specific native codes manage access to at least one field by means of a memory address offset and/or by means of a specific access address.

5. A method according to claim 3, **characterized in that** the native codes of the second set of specific native codes manage access to the at least one method of the native application by means of a memory address offset and/or by means of a specific access address.

6. A method according to claim 2, **characterized in that** the compiling step further comprises:
a step of generating a specific execution exception handling mechanism within the at least one object method belonging to the set of objects;
a step of inserting a specific mechanism for managing the objects not used by the virtual machine.

7. A device for providing an application by means of a virtual machine **characterized in that** it comprises
means for compiling an application written in a source code into a native application for a target platform, the means comprising:
means for determining at least one method of an object of the application to correspond to a corresponding symbol in a native code of the native application;
means for generating a function stub for each method to be compiled of the application wherein the stub transforms a calling convention of the virtual machine into a calling convention of the compiled method, and
means for creating the native application by inserting the stubs in a native code of the native application; and
means for transforming the compiled application into a library, the library being made available to the virtual machine by installing a compiled code in the virtual machine apt, for each compiled method, to:
request, for each compiled method, a descriptor of the method from the virtual machine;
modify the descriptor of the method such that each invocation from an uncompiled code calls the stub corresponding to the method, and indicating the address of the native function which will perform the functionality of the method such that the stub invokes the function after transforming the calling convention; and
means for executing the application by the virtual machine.

8. A computer program product downloadable from a communication network and/or stored on a computer-readable medium and/or executable by a microprocessor, **characterized in that** it comprises program code instructions for executing the method of any of claims 1 to 6 when executed on a computer.
